# EUROPEAN PATENT APPLICATION

(11) **EP 2 747 426 A2**
(43) Date of publication of application: **25.06.2014**
(21) Application number: 12824324.3
(22) Date of filing: 16.08.2012
(51) Int. Cl.: H04N 7/34

(54) **IMAGE ENCODING/DECODING APPARATUS AND METHOD TO WHICH FILTER SELECTION BY PRECISE UNITS IS APPLIED**

(30) Priority: 18.08.2011 KR 20110082386
(71) Applicant: Humax Co., Ltd., Seongnam-si, Gyeonggi-do 463-825 (KR)
(72) Inventor: YIE, Chung Ku, Incheon 403-762 (KR); KIM, Min Sung, Anyang-si Gyeonggi-do 431-719 (KR); LEE, Ul Ho, Hwaseong-si Gyeonggi-do 448-140 (KR)
(74) Representative: Zardi, Marco
(86) International application number: PCT/KR2012/006528
(87) International publication number: WO 2013/025065

(57) **Abstract**

According to the present invention, an image encoding/decoding method involves selecting, for units which are more precise than picture units, interpolation filters to be used in a motion compensated inter prediction to calculate sub-pixel values, wherein said precise units include at least one of a slice unit and a partition unit. Thus, encoding precision may be improved in a high resolution image having high definition (HD) or greater resolution.

## Description

### [Technical Field]

The present invention relates to a method and apparatus for encoding/decoding an image.

### [Background Art]

In general, in an image compression method, in order to enhance compression efficiency, inter prediction and intra prediction technology that removes redundancy of pictures is used.

A method of encoding an image using inter prediction includes a typical motion compensation prediction encoding method as a method of compressing an image by removing spatial redundancy between pictures.

Motion compensation prediction encoding generates a Motion Vector (MV) by searching for a region similar to a presently encoded block in at least one reference picture positioned at the front and/or the rear of a presently encoded picture, performs Discrete Cosine Transform (DCT) of a residual of a present block and a prediction block obtained by performing motion compensation using the generated MV, and quantizes, entropy encodes, and transmits.

In motion compensation based inter prediction, by dividing one picture into a plurality of blocks having a predetermined size, an MV is generated, and motion compensation is performed using the generated MV. An individual motion parameter of each prediction block obtained by performing motion compensation is transmitted to a decoder.

Because MVs may have non-integer values, motion compensation based inter prediction requires to evaluate pixel values of a reference picture at non-integer positions. A pixel value at non-integer positions is designated as a sub-pixel value, and a process of determining such a value is referred to as interpolation. A sub-pixel value is calculated by applying and filtering a filter coefficient to peripheral pixels of an integer pixel of a reference picture. For example, in H.264/AVC, in a P picture, prediction is performed using a 6-tab interpolation filter having filter coefficients (1,-5, 20, 20, -5, 1)/32). In general, when using higher order filters, a better motion prediction performance is obtained, but there is a defect that a transmitting amount of a filter coefficient of an interpolation filter to transmit to the decoder increases.

When encoding motion compensation prediction, as a prior document related to an Adaptive Interpolation Filter (AIF), "Adaptive interpolation filter of a macroblock unit using ultra high resolution technique based on study" (Korean electronic engineering academy, 2010 summer comprehensive symposium contest, written by Jaehyun Cho, Taehwan Lee, Byungchul Song, and announced on June 2010) and Korean Patent Laid-Open Publication No. 10-2010-0045549 (title of invention: Method and apparatus for encoding/decoding image using Adaptive interpolation filter coefficient) exist.

### [Disclosure]

### [Technical Problem]

The present invention has been made in view of the above problems, and provides a method and apparatus for encoding an image for enhancing encoding precision in a high resolution image having a resolution of a High Definition (HD) level or more.

The present invention further provides a method and apparatus for decoding an image for enhancing encoding precision in a high resolution image having a resolution of an HD level or more.

### [Technical Solution]

In accordance with an aspect of the present invention, a method of encoding an image includes: generating a prediction unit for inter prediction of an input image; performing motion compensation based inter prediction of the prediction unit; and the performing a motion compensation based inter prediction of the prediction unit includes selecting a filter used for the motion compensation based inter prediction on a more precise unit basis, the more precise unit being more precise than a picture unit, wherein the precise unit includes at least one of a slice unit and a partition unit and calculating a sub-pixel value. The performing of motion compensation based inter prediction may include: dividing a partition of the prediction unit and performing block merging that merges samples belonging to a mergeable block set including peripheral samples of a present block with the present block; and selecting filter information of the filter used for the motion compensation based inter prediction on the precise unit basis and calculating a subfixel value, wherein the filter information includes at least one of a filter index and a filter coefficient. The same filter information may be allocated to the merged block and be transmitted to a decoder. The mergeable block set may include at least one of a block generated by geometrical partitioning and a block generated by asymmetric partitioning.

In accordance with another aspect of the present invention, a method of decoding an image includes: entropy decoding received bitstream, performing inverse quantization and inverse transform of a residual, and restoring the residual; generating a prediction unit using prediction unit information and a motion parameter; performing inter prediction of the prediction unit using encoded filter information by selecting on a more precise unit basis, the more precise unit being more precise than a picture unit, wherein the precise unit includes at least one of a slice unit and a partition unit and the filter information includes at least one of a filter index and a filter coefficient; restoring an image by adding the residual to the prediction unit in which inter prediction is performed by performing inter prediction of the prediction unit. After a partition of the prediction unit is divided, a present block and a merged block among blocks belonging to a mergeable block set may have the same filter information. The filter information may be filter information of a filter used for motion compensation based inter prediction. The mergeable block set may include at least one of a block generated by geometrical partitioning and a block generated by asymmetric partitioning. Header information decoded through the entropy decoding may include prediction unit information and a motion parameter and filter information for motion compensation and prediction.

In accordance with another aspect of the present invention, an image decoding apparatus includes: an inverse quantization unit and inverse transform unit that perform inverse quantization and inverse transform of a residual by entropy decoding received bitstream and that restore the residual; a motion compensation unit that generates a prediction unit using prediction unit information and a motion parameter; and an adder that restores an image by adding the residual to the prediction unit, wherein the motion compensation unit performs inter prediction of the prediction unit using filter information encoded by selecting on a more precise unit basis, the more precise unit being more precise than the picture unit, the precise unit includes at least one of a slice unit and a partition unit, and the filter information includes at least one of a filter index and a filter coefficient.

### [Advantageous Effects]

As described above, according to an apparatus and method for encoding/decoding an image using region merging or block merging, by selecting an Adaptive Loop Filter (ALF) used after an interpolation filter or a deblocking filter used for motion compensation based inter prediction in a high resolution image having a resolution of a HD level or more on a more precise unit basis, the more precise unit being more precise than a picture unit, for example, a slice unit or a partition unit (the partition unit may include an extended macroblock, a macro block, or a block), encoding precision can be enhanced. Therefore, compared with when transmitting filter information of a filter in a pixel unit basis to a decoder, by reducing a quantity of additional information to transmit, encoding efficiency can be improved, and decoder complexity can be reduced.

Further, when using a region unit or a partition unit as a transmitting unit of filter information (a filter index or a filter coefficient) of an interpolation filter or an ALF used for motion compensation based inter prediction, by using an entire merged block or an entire merged region using region merging or block merging as a transmitting unit of filter information, by reducing a quantity of additional information to transmit to the decoder, encoding efficiency of an image having a high resolution of an HD level or an ultra HD level or more can be improved.

Further, when encoding and transmitting filter information (a filter index or a filter coefficient) of an interpolation filter or an ALF used for motion compensation based inter prediction on a smaller region unit basis than a picture unit, compared with a case of using a single filter per existing one picture, encoding efficiency of an image having a high resolution of an HD level or a ultra HD level or more can be improved.

### [Description of Drawings]

FIG. 1 is a conceptual diagram illustrating a recursive coding unit structure according to an exemplary embodiment of the present invention.
FIG. 2 is a conceptual diagram illustrating a process of selecting and using a filter in a slice unit according to an exemplary embodiment of the present invention.
FIG. 3 is a conceptual diagram illustrating a process of selecting and using a filter in a partition unit according to another exemplary embodiment of the present invention.
FIG. 4 is a conceptual diagram illustrating a process of selecting and using a filter in an asymmetric partitioning unit according to another exemplary embodiment of the present invention.
FIG. 5 illustrates an exemplary embodiment of geometric partitioning having a shape other than a square in a PU.
FIG. 6 is a conceptual diagram illustrating a process of selecting and using a filter in a geometric partition unit having a shape other than a square according to another exemplary embodiment of the present invention.
FIG. 7 is a conceptual diagram illustrating a process of selecting and using a filter in a geometric partition unit having a shape other than a square according to another exemplary embodiment of the present invention.
FIG. 8 is a conceptual diagram illustrating a process of selecting and using a filter in a partition unit using block merging according to another exemplary embodiment of the present invention.
FIGS. 9 and 10 are conceptual diagrams illustrating a process of selecting and using a filter in a partition unit using block merging in asymmetric partitioning according to another exemplary embodiment of the present invention.
FIG. 11 is a conceptual diagram illustrating a process of selecting and using a filter in a partition unit using block merging in geometric partitioning according to another exemplary embodiment of the present invention.
FIGS. 12 and 13 are conceptual diagrams illustrating a process of selecting and using a filter in a partition unit using block merging in geometric partitioning according to another exemplary embodiment of the present invention.
FIG. 14 is a block diagram illustrating a configuration of an image encoding apparatus for selecting and encoding a filter in a slice or partition unit according to an exemplary embodiment of the present invention.
FIG. 15 is a flowchart illustrating an image decoding method of selecting and encoding a filter in a slice or partition unit according to an exemplary embodiment of the present invention.
FIG. 16 is a block diagram illustrating a configuration of an image decoding apparatus according to an exemplary embodiment of the present invention.
FIG. 17 is a flowchart illustrating a method of decoding an image according to an exemplary embodiment of the present invention.

### [Best Modes]

While the present invention may be embodied in many different forms, specific embodiments of the present invention are shown in drawings and are described herein in detail.

However, the present invention is to be considered as an exemplification of the principles of the invention and is not intended to limit the invention to the specific embodiments illustrated.

Terms such as a first and a second are used for describing various constituent elements, but the constituent elements are not limited by the terms. The terms are used only for distinguishing a constituent element from other constituent elements. For example, while not deviating from the scope of the present invention, a first constituent element may be referred to as a second constituent element and similarly, a second constituent element may be referred to as a first constituent element. A term "and/or" includes a combination of a plurality of related items or any item of a plurality of related description items.

Throughout this specification and the claims that follow, when it is described that an element is "connected" or "coupled" to another element, it should be understood that the element may be directly connected or coupled to the other element or electrically coupled to the other element through a third element. In contrast, when it is described that an element is "directly connected" or "directly coupled" to another element, it should be understood that there is no intermediate part between the two parts.

Technical terms used here are to only describe a specific exemplary embodiment and are not intended to limit the present invention. Singular forms used here include a plurality of forms unless phrases explicitly represent an opposite meaning. A meaning of "comprising" or "having" used in a specification embodies a characteristic, numeral, step, operation, element, component, or combinations thereof and does not exclude presence or addition of at least one characteristic, numeral, step, operation, element, component, or combinations thereof.

Although not differently defined, entire terms including a technical term and a scientific term used here have the same meaning as a meaning that may be generally understood by a person of common skill in the art. It is additionally analyzed that terms defined in a generally used dictionary have a meaning corresponding to a related technology document and presently disclosed contents and are not analyzed as an ideal or very official meaning unless stated otherwise.

Hereinafter, exemplary embodiments of the present invention will be described herein below with reference to the accompanying drawings. The drawings and description are to be regarded as illustrative in nature and not restrictive. Like reference numerals designate like elements throughout the specification.

In an exemplary embodiment of the present invention, in order to apply to a high resolution having a resolution of an HD level or more, encoding and decoding such as inter/intra prediction, transform, quantization, and entropy encoding may be performed using an Extended Macroblock size of a 32x32 pixel size or more and encoding and decoding may be performed using a recursive Coding Unit (CU) structure to be described hereinafter.

Hereinafter, interpolation of a sub-pixel value may be applied to both of luma and chroma components of an image. Here, for simple description, only interpolation of sub-pixel values of a luma component is exemplified.

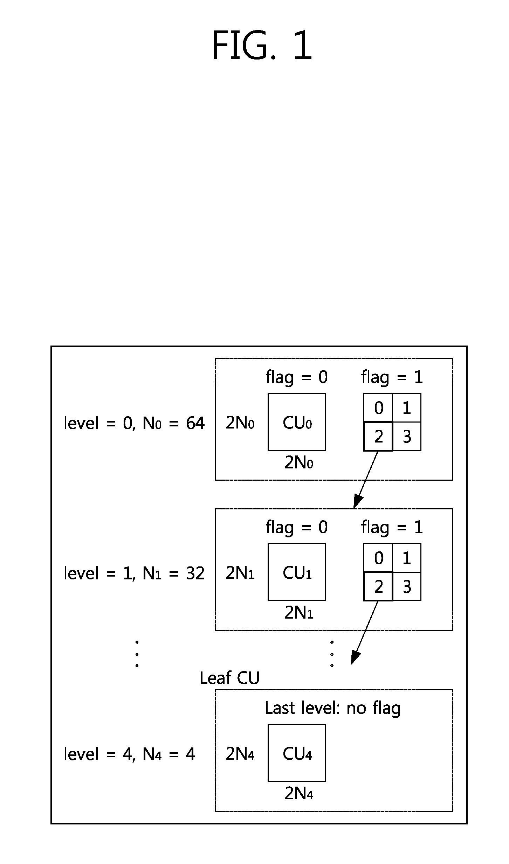

FIG. 1 is a conceptual diagram illustrating a recursive coding unit structure according to an exemplary embodiment of the present invention.

Referring to FIG. 1, each CU has a square shape and may have a variable size of 2N X 2N (unit pixel). Inter prediction, intra prediction, transform, quantization, and entropy encoding may be performed in a CU unit. The CU may include a largest coding unit (LCU) and a smallest coding unit (SCU), and a size of the LCU and the SCU may be represented with a power value of 2 having a size of 8 or more.

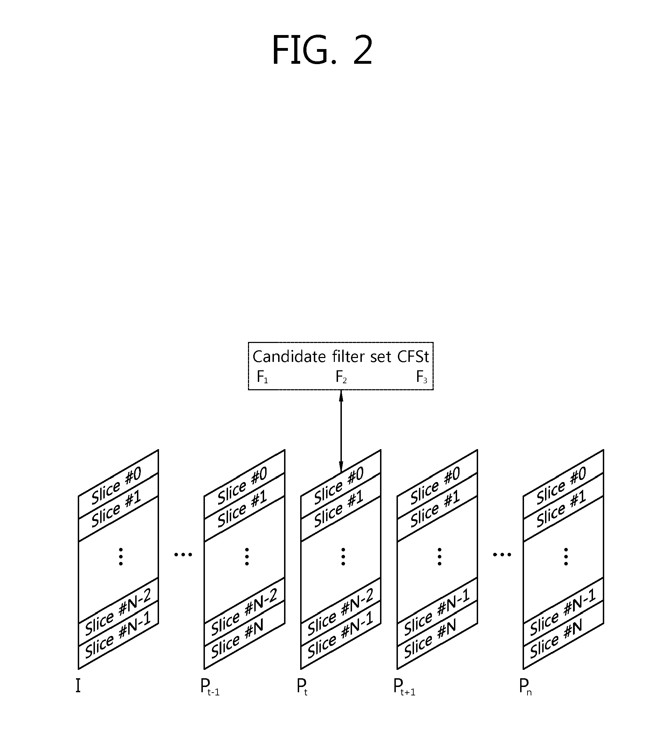

The CU according to an exemplary embodiment of the present invention may have a recursive tree structure. FIG. 1 illustrates a case in which a size (2N0) of one side of CU0, which is an LCU is 128 (N0=64) and in which a maximum level or depth is 5. A recursive structure may be expressed through a series of flag. For example, a flag value of a coding unit CUk in which a level or a depth is k is 0, and coding of the coding unit CUk is performed in a present level or depth, when a flag value is 1, a coding unit CUk in which a present level or depth is k is divided into four independent coding units (CUk+1), and in the divided coding unit (CUk+1), a level or a depth is (k+1), and a size thereof is (Nk+1) X (Nk+1). In this case, the coding unit (CUk+1) may be represented with a sub-coding unit of the coding unit CUk. Until a level or a depth of the coding unit (CUk+1) arrives at a maximum allowable level or depth, the coding unit (CUk+1) may be recursively processed. When a level or a depth of the coding unit (CUk+1) is the same as a maximum allowable level or depth (in FIG. 2, a maximum allowable level or depth is 4), division is no longer allowed.

A size of the LCU and a size of the SCU may be included in a Sequence Parameter Set (SPS). The SPS may include a maximum allowable level or depth of the LCU. For example, in FIG. 1, when a maximum allowable layer or depth is 5 and a size of one side of the LCU is 128 (unit pixel), five coding unit sizes of 128 X 128 (LCU), 64 X 64, 32 X 32, 16 X 16, and 8 X 8 (SCU) are available. That is, when a size of the LCU and a maximum allowable layer or depth are given, a size of an allowable coding unit may be determined.

A merit when using a recursive coding unit structure according to an exemplary embodiment of the present invention is as follows.

First, a size larger than existing 16 X 16 macro blocks may be supported. If an interest image region is homogeneous, an LCU may display an interest image region with smaller number of symbols than when using several small blocks.

Second, by supporting an LCU having random various sizes, compared with when using a macro block of a fixed size, a codec may be easily optimized to various contents, applications, and apparatuses. That is, by appropriately selecting an LCU size and a maximum layer level or a maximum depth, the layer block structure may be more optimized to a target application.

Third, by using a single unit form of a coding unit LCU instead of dividing a macro block, a sub-macro block, and an extended macroblock, a multi level layer structure may be very simply represented using an LCU size, a maximum level (or a maximum depth), and a series of flag. When using together with size-independent syntax representation, it is sufficient to clarify a syntax item of one generalized size of the remaining coding tools and such consistency may simplify an actual parsing process. A largest value of a level (or a largest depth) may have a random value and may have a larger value than an allowed value in an existing H.264/AVC encoding method. Entire syntax elements may be clarified with an independent and consistent method in a size of the CU using size-independent syntax representation. A splitting process of the CU may be circularly clarified, and other syntax elements of a leaf coding unit (a last coding unit of a layer level) may be defined in the same size regardless of a coding unit size. Such representation is very effective in reducing parsing complexity, and when a large level or depth is allowed, clarification of representation can be improved.

As described above, when a hierarchical splitting process is complete, for a leaf node of a coding unit layer tree, inter prediction or intra prediction can be performed without more splitting, and such a leaf coding unit is used as a Prediction Unit (PU), which is a basic unit of inter prediction or intra prediction.

That is, for inter prediction or intra prediction, partitioning is performed for the leaf coding unit. Partitioning is performed for the PU. Here, the PU is a basic unit for inter prediction or intra prediction, may become an existing macro block unit or sub-macro block unit, and may become an extended macroblock unit of a 32 X 32 pixel size or more.

Information (an MV and a difference value of the MV) related to prediction is transmitted to the decoder on a prediction unit basis, which is a basic unit of inter prediction.

Partitioning for inter prediction or intra prediction may be performed with an asymmetric partitioning method, be performed with a geometric partitioning method having a random shape other than a square, and be performed with a partitioning method according to an edge direction.

In motion compensation based inter prediction, by dividing one picture into a plurality of blocks having a predetermined size, an MV is generated, and motion compensation is performed using the generated MV. Because MVs may have non-integer values, in order to calculate sub-pixel values of a reference picture at non-integer positions, motion compensation based inter prediction uses an interpolation filter. That is, a sub-pixel value is calculated by applying and filtering a filter coefficient to peripheral pixels of an integer pixel of a reference picture. When using a higher order of filters, a better motion prediction performance is obtained, but a transmitting amount of a filter coefficient of an interpolation filter to transmit to the decoder increases.

Therefore, an adaptive use method of an interpolation filter according to an exemplary embodiment of the present invention performs encoding/decoding by selecting and using an interpolation filter in a more precise unit (e.g., a slice unit or in a partition unit (the partition unit may include an extended macroblock, a macro block, or a block)) more precise than a picture unit based on an experimental result in which an optimal interpolation filter within one picture may be different according to a region within a picture.

Hereinafter, a method of encoding/decoding by selecting and using an interpolation filter used for motion compensation based inter prediction according to exemplary embodiments of the present invention in a more precise unit more precise than a picture unit, for example, in a slice unit or a partition unit (the partition unit may include an extended macroblock, a macro block, or a block) will be described in detail. Here, the more precise unit more precise than a picture unit may become a smaller region unit than the picture unit. The region may become a unit smaller than a picture unit and larger than a pixel. A region unit smaller than a picture unit and larger than a pixel may become, for example, a basic unit formed with at least one block, subblock, macro block, extended macroblock, slice, Coding Unit, Largest Coding Unit (LCU), Smallest Coding Unit (SCU), Prediction Unit, partition, or group or a basic unit set formed with a set of basic units formed with a plurality of basic units. One picture may be divided, for example, in a region unit having a uniform size formed with 16 x 16 pixels.

As described above, filter information of an interpolation filter used for the motion compensation based inter prediction may be selected and used in a more precise region unit than a picture unit and be transmitted to the decoder, and the region unit may have an uniform size within an entire picture or one picture, but may have different sizes on each picture basis and may be adaptively adjusted to have different sizes within the same picture.

Size information of the region may be included in a slice header or a Picture Parameter Set (PPS) to be transmitted to the decoder. Filter information of the interpolation filter may be included in a slice header or a PPS to be transmitted to the decoder. On-off information of the interpolation filter may be included in the slice header or the PPS to be transmitted to the decoder. For example, filter information of the interpolation filter may be included in the PPS to be transmitted to the decoder, and on-off information of the interpolation filter may be included in each slice header to be transmitted to the decoder.

A form of the region may be a symmetrical shape of a square form and may be an asymmetric shape such as a rectangular shape and various geometrical shape such as a 'reversed L' shape and a triangular shape.

In order to reduce a quantity of additional information, for example, filter information of an interpolation filter used for motion compensation based inter prediction and on-off information of the interpolation filter to transmit to the decoder, in a plurality of regions divided in one picture, at least two regions are merged, and by using entire merged regions as a transmitting unit of the additional information, by reducing a quantity of additional information to transmit to the decoder, encoding efficiency of an image having a high resolution of an HD level or a Ultra HD level or more can be enhanced. The merged at least two regions may become a top peripheral region and/or a left peripheral region in a specific region, may become at least two peripheral regions that enclose the specific region, may become regions belonging to at least two columns arranged in a vertical direction within one picture, and may become regions belonging to at least two rows arranged in a horizontal direction within one picture.

FIG. 2 is a conceptual diagram illustrating a process of selecting and using a filter in a slice unit according to an exemplary embodiment of the present invention.

Referring to FIG. 2, a present picture Pt of a time t selects and uses optimal one filter among candidate filters, for example, three filters F1, F2, and F3 belonging to a candidate filter set CFSt in a time t. A plurality of filters may be distinguished by a filter index. The filter index is an identifier for distinguishing selected filters. The filter index may be included in filter information of a selected filter to be transmitted to the decoder. Hereinafter, the filter may be, for example, an interpolation filter used for motion compensation based inter prediction.

Further, optimal one filter of candidate filters, for example, three filters F1, F2, and F3 belonging to a candidate filter set CFSt of a time t may be selected and used in a slice unit within a present picture Pt of a time t. That is, an optimal filter may be selected on a slice basis of the present picture Pt and therefore, the selected optimal filter may become different filters on a slice basis (slice #0, slice #1, slice #2, ... slice #N) of the present picture Pt. For example, for a slice number 0 (slice #0) of the present picture Pt, an F1 filter may be selected among candidate filters belonging to a candidate filter set CFSt, and for a slice number 1 (slice #1) of the present picture Pt, an F2 filter may be selected among candidate filters belonging to the candidate filter set CFSt. Alternatively, a selected optimal filter may become the same filter on a slice basis of the present picture Pt. For example, for the slice number 0 of the present picture Pt, the F1 filter may be selected among candidate filters belonging to the candidate filter set CFSt, and for the slice number 1 of the present picture Pt, the F1 filter may be selected among candidate filters belonging to the candidate filter set CFSt.

As optimal filter selection on a slice basis of the present picture Pt, a filter may be selected among filters belonging to a Candidate Filter Set

(CFS) according to rate-distortion optimization criterion.

By selecting optimal one filter of candidate filters, for example, three filters F1, F2, and F3 belonging to a candidate filter set CFSt in a time t in a slice unit within a present picture Pt of a time t, filter information (a filter index or a filter coefficient) can be transmitted in a more precise slice unit than a picture unit and thus encoding precision can be enhanced.

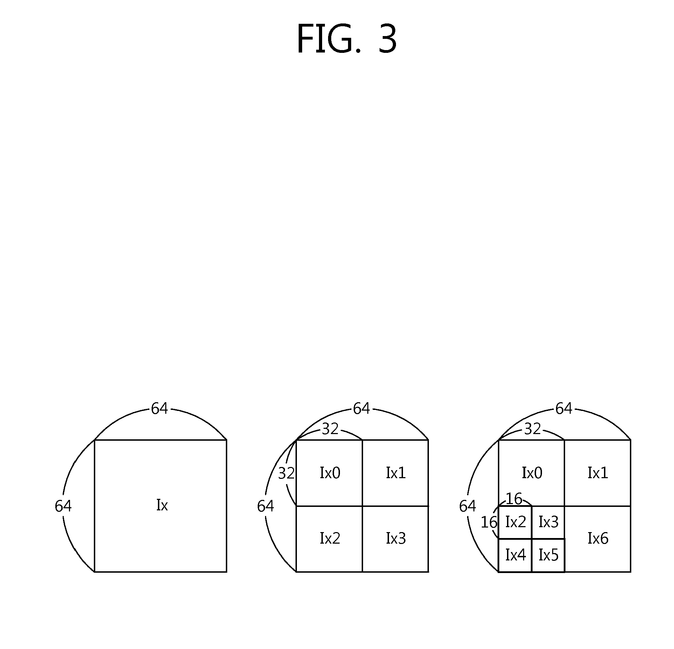

FIG. 3 is a conceptual diagram illustrating a process of selecting and using a filter in a partition unit according to another exemplary embodiment of the present invention.

Here, a partition may include an extended macroblock (EMB), a macro block (MB), or a block. An EMB size is a 32 X 32 pixel size or more and may include, for example, a 32 X 32 pixel size, a 64 X 64 pixel size, or a 128 X 128 pixel size. An MB size may become, for example 16 X 16 pixels.

FIG. 3 illustrates a case in which a partition is formed with 64 X 64 pixels, 32 X 32 pixels, and 16 X 16 pixels, for example, illustrates a relationship between a partition and filter indices. Left 64 X 64 partitions of FIG. 3 illustrate a case in which 64 X 64 partitions are an EMB of a 64 X 64 pixel size, and an intermediate drawing of FIG. 3 illustrate a case in which 64 X 64 partitions are divided into four partitions of a 32 X 32 pixel size, and illustrate a case in which a partition of a 32 X 32 pixel size is an EMB of a 32 X 32 pixel size. A right side drawing of FIG. 3 illustrate a case in which 64 X 64 partitions are divided into 4 partitions of a 32 X 32 pixel size, a case in which 32 X 32 partitions of a left lower end are divided again into 4 partitions of a 16 X 16 pixel size, a case in which a partition of a 32 X 32 pixel size is an EMB of a 32 X 32 pixel size, and a case in which a partition of a 16 X 16 pixel size is an MB of a 16 X 16 pixel size.

For example, left 64 X 64 partitions of FIG. 3 are a case in which 64 X 64 partitions are selected into one 64 X 64 block through rate-distortion optimization, and for 64 X 64 partitions, one filter index Ix is transmitted to the decoder.

For example, in intermediate 64 X 64 partitions of FIG. 3, for each of four partitions of 32 X 32 partitions, one filter index is transmitted to the decoder. Here, for each of four partitions of 32 X 32 partitions, as shown in an intermediate drawing of FIG. 3, different filter indices may be selected through rate-distortion optimization (Ix0, Ix1, Ix2, Ix3), and for four partitions of 32 X 32 partitions, the partially same filter index or the entirely same filter index may be selected through rate-distortion optimization.

For example, in right 64 X 64 partitions of FIG. 3, for each of three partitions of 32 X 32 partitions, one filter index is transmitted to the decoder, and for each of four partitions of 32 X 32 partitions, one filter index is transmitted to the decoder and thus maximum 7 filter indices may be used. Here, for each of four partitions of 32 X 32 partitions, as shown in an intermediate drawing of FIG. 3, different filter indices may be used through rate-distortion optimization (Ix0, Ix1, Ix2, Ix3), and for four partitions of 32 X 32 partitions, the partially same filter index or the entirely same filter index may be selected through rate-distortion optimization.

When 64 X 64 partitions are divided into 16 partitions of 16 X 16 partitions, maximum 16 filter indices may be used.

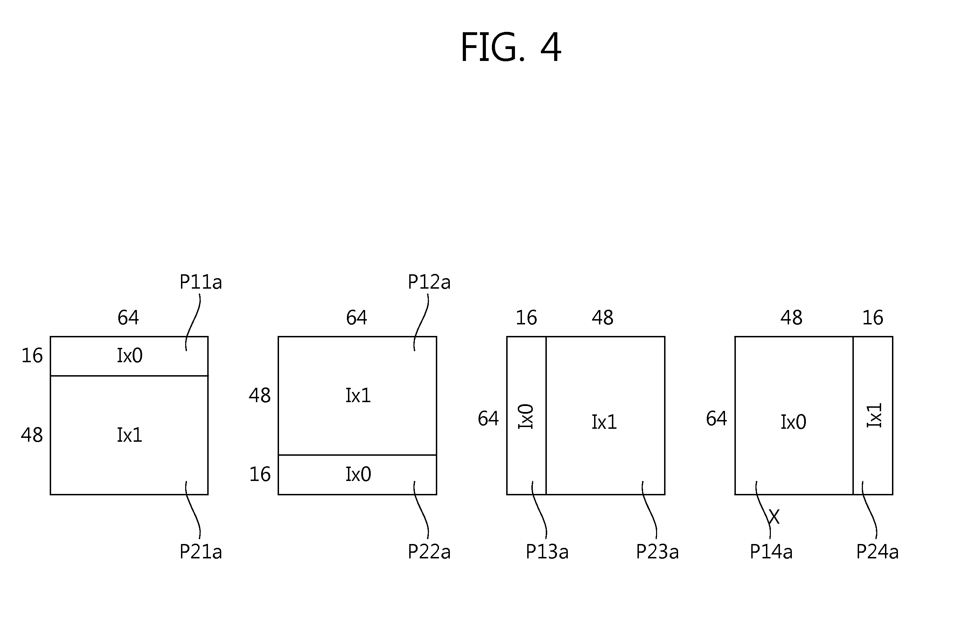

FIG. 4 is a conceptual diagram illustrating a process of selecting and using a filter in an asymmetric partitioning unit according to another exemplary embodiment of the present invention.

When a size of a PU for inter prediction or intra prediction is M X M (M is the natural number and a unit is a pixel), asymmetrical partitioning may be performed in a horizontal direction or a vertical direction of a coding unit. FIG. 4 illustrates a case in which a size of the PU is, for example, 64 X 64.

Referring to FIG. 4, by performing asymmetrical partitioning in a horizontal direction, the partition may be divided into a partition P11a of a 64 X 16 pixel size and a partition P21 a of a 64 X 48 pixel size or may be divided into a partition P12a of a 64 X 48 pixel size and a partition P22a of a 64 X 16 pixel size. Further, by performing asymmetrical partitioning in a vertical direction, the partition may be divided into a partition P13a of a 16 X 64 pixel size and a partition P23a of a 48 X 64 pixel size or may be divided into a partition P14a of a 48 X 64 pixel size and a partition P24a of a 16 X 64 pixel size.

For each of 64 X 16 partitions, 64 X 48 partitions, 16 X 64 partitions, and 48 X 64 partitions of FIG. 4, one filter index is transmitted to the decoder. Here, for each of 64 X 16 partitions, 64 X 48 partitions, 16 X 64 partitions, and 48 X 64 partitions within 64 X 64 partitions, different filter indices may be selected and the same filter index may be selected through rate-distortion optimization.

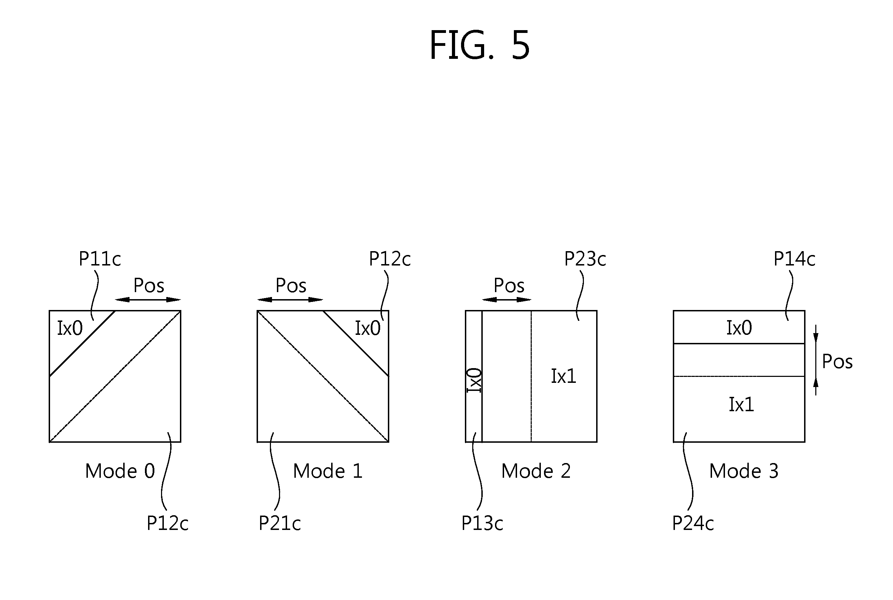

FIG. 5 illustrates an exemplary embodiment of geometric partitioning having a shape other than a square in a PU.

Referring to FIG. 5, in the PU, a boundary line L of a geometric partition may be defined as follows. By dividing the center of the PU into four quadrants using an X-axis and a Y-axis, when drawing a perpendicular line from the center of the PU to the boundary line L, by a vertical distance p from the center O of the PU to the boundary line L, and a rotation angle θ to a perpendicular line counterclockwise from an X-axis, an entire boundary line of a random direction may be specified.

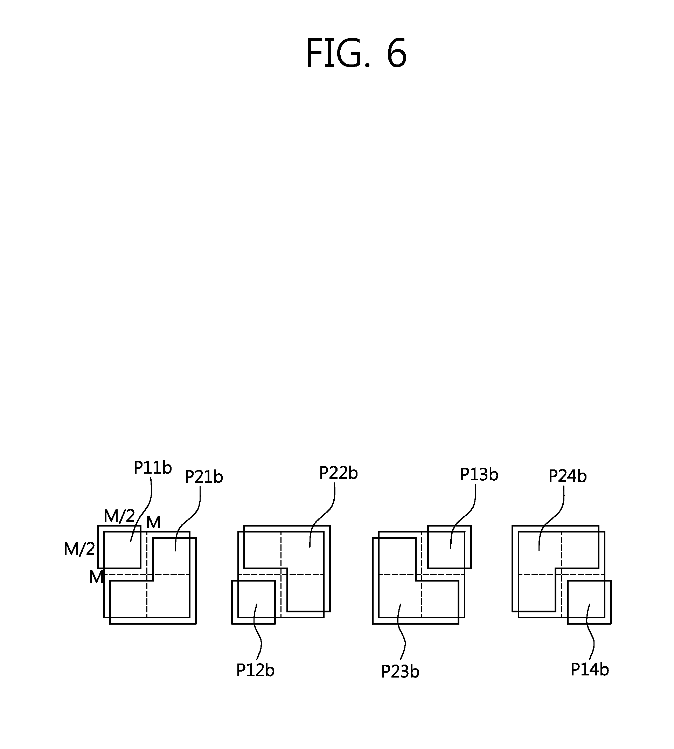

FIG. 6 is a conceptual diagram illustrating a process of selecting and using a filter in a geometric partition unit having a shape other than a square according to another exemplary embodiment of the present invention.

Referring to FIG. 6, after dividing into four quadrants based on a PU for inter prediction or intra prediction, a left top block of a second quadrant may be divided into a partition P11 b, and a ' 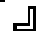 '-shaped block formed with the remaining first, third, and fourth quadrants may be divided into a partition P21 b. Alternatively, a left lower end block of a third quadrant may be divided into a partition P12b, and a block formed with the remaining first, second, and fourth quadrants may be divided into a partition P22b. Alternatively, a right top block of a first quadrant may be divided into a partition P13b, and a block formed with the remaining second, third, and fourth quadrants may be divided into a partition P23b. Alternatively, a right lower end block of a four quadrant may be divided into a partition P14b, and a block formed with the remaining first, second, and third quadrants may be divided into a partition P24b.

As described above, by dividing the partition in a 'reversed L' shape, upon dividing the partition, when a moving object exists in an edge block, i.e., left top, left lower end, right top, and right lower end blocks, encoding can be more effectively performed than a case of dividing a partition into four blocks. Among the four partitions, a corresponding partition may be selected and used according to an edge block in which a moving object is positioned.

Referring to FIG. 6, for each geometric partition, one filter index may be transmitted to the decoder. Here, for each geometric partition, different filter indices may be selected and the same filter index may be selected through rate-distortion optimization.

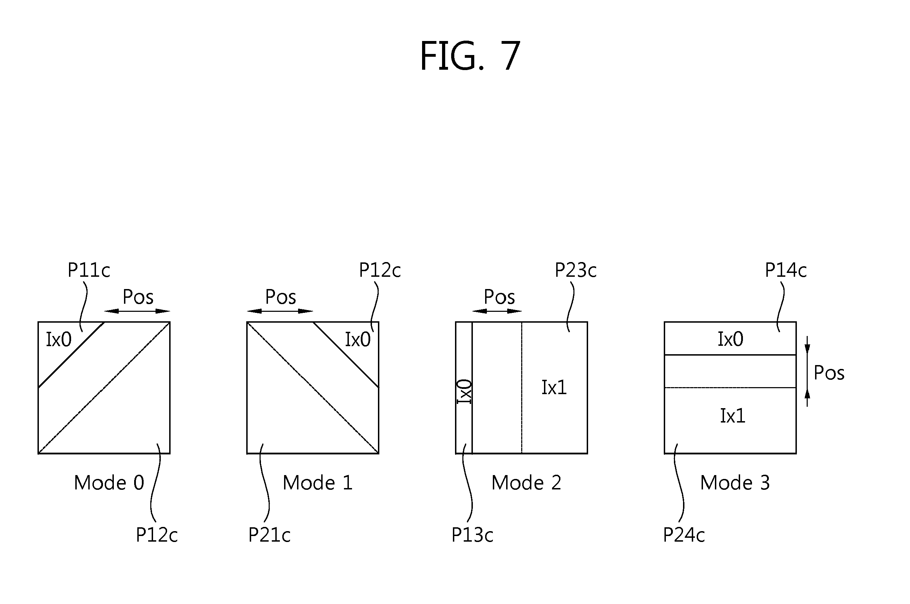

FIG. 7 is a conceptual diagram illustrating a process of selecting and using a filter in a geometric partition unit having a shape other than a square according to another exemplary embodiment of the present invention.

Referring to FIG. 7, a PU for inter prediction or intra prediction may be divided into two different irregular regions (modes 0 and 1) or into rectangular regions of different sizes (modes 2 and 3).

Here, a parameter 'pos' is used for representing a position of a partition boundary. In modes 0 and 1, 'pos' represents a horizontal direction distance from a diagonal line of the PU to a partition boundary, and in modes 2 and 3, 'pos' represents a horizontal direction distance from a vertical bisector or a horizontal bisector of the PU to a partition boundary. In FIG. 4c, mode information may be transmitted to the decoder. Among the four modes, from a Rate Distortion (RD) viewpoint, a mode having a minimum RD cost may be used for inter prediction.

Referring to FIG. 7, for each geometric partition, one filter index may be transmitted to the decoder. Here, for each geometric partition, different filter indices may be selected through rate-distortion optimization, and the entire same filter index may be selected.

A size of a block after partitioning may be varied. Further, when applying the foregoing asymmetrical partitioning and geometric partitioning, a shape of a block after partitioning may be an asymmetrical shape such as a rectangular shape and various geometrical shape such as a 'reversed L' shape and a triangular shape, as shown in FIGS. 4 to 7 as well as an existing square shape.

In a high resolution image having a resolution of an HD level or more, in motion compensation based inter prediction, in order to enhance coding efficiency by enhancing a prediction performance, a unit that sends filter information (a filter index or a filter coefficient) of the interpolation filter may be adaptively adjusted in a more precise unit (a slice unit, an (extended) macroblock unit, and a partition unit) instead of a picture unit.

In a high resolution image having a resolution of HD or more, because the number of blocks per picture increases, when transmitting a filter coefficient to the decoder in each partition, a quantity of transmitted filter information is very much and thus, it is not preferable in view of coding efficiency. Therefore, when using the partition unit as a transmitting unit of filter information of an interpolation filter used for motion compensation based inter prediction, by using an entire merged block in a transmitting unit using block merging, by reducing a quantity of additional information to transmit to the decoder, encoding efficiency of an image having a high resolution of an HD level or ultra HD level or more can be improved.

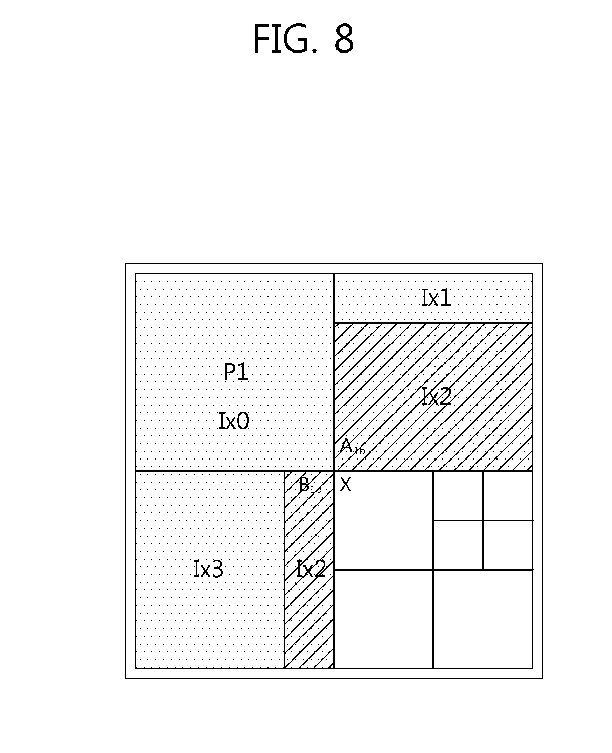

FIG. 8 is a conceptual diagram illustrating a process of selecting and using a filter in a partition unit using block merging according to another exemplary embodiment of the present invention.

Referring to FIG. 8, after one picture is hierarchically divided to a leaf coding unit, a present block X is merged with a previously encoded block Ao and block Bo, and the blocks Ao, Bo, and X apply the same motion parameter and/or filter information and are transmitted to the decoder. Here, the motion parameter may include, for example, an MV and an MV difference value. Filter information may include a filter index and/or a filter coefficient.

In this case, a merging flag representing whether block merging is applied may be transmitted to the decoder.

Hereinafter, in inter prediction, a set of entire prediction blocks is referred to as a 'temporary block' and a set of blocks in which merging with a specific block is allowed is referred to as a 'mergeable block'. The temporary block includes encoded blocks up to a block before a present block. A reference of the mergeable blocks may be previously determined, for example, to top peripheral samples and left peripheral samples of the present block or to two blocks of a top peripheral block and a left peripheral block of the present block. Alternatively, a reference of the mergeable blocks may be previously determined to at least two blocks, for example, to the entire top peripheral blocks and the entire left peripheral blocks of the present block.

A reference of the mergeable blocks may be previously determined between an encoder and a decoder according to a promise. For example, as described above, top peripheral samples and left peripheral samples of the present block are determined with a default value and information notifying a reference of separately mergeable blocks may not be transmitted to the decoder. Alternatively, information representing a reference of mergeable blocks may be sent to the decoder.

If a specific block is encoded and if a mergeable block is not empty, information representing whether a mergeable block is to be merged may be transmitted to the decoder.

A set of mergeable blocks may have, for example, two maximum elements (the two sample positions, i.e., a left peripheral sample position and a top peripheral sample position). However, a set of mergeable blocks is not necessarily limited to have only two candidate sample positions or two candidate blocks and may have at least two candidate sample positions or candidate blocks. Hereinafter, a case in which a set of mergeable blocks has two candidate blocks will be described with reference to FIG. 8.

FIG. 8 illustrates a case of dividing one picture into prediction blocks with a quadtree-based division method. Two blocks P1 and P2 of a largest size of the top of FIG. 8 are MBs and are prediction blocks of a largest size. The remaining blocks of FIG. 8 are obtained by subdivision of a corresponding MB. The present block was represented with 'X'. In FIGS. 8 to 13, a region indicated by a dotted line represents encoded blocks before the present block X and may become the foregoing 'temporary block'.

A mergeable block may be generated as follows.

When the mergeable block is started from a top-left sample position of the present block, a left peripheral sample position of the present block and a top peripheral sample position of the present block become a candidate block position for block merging. When a set of mergeable blocks is not empty, a merging flag representing that the present block is merged with the mergeable block is transmitted to the decoder. Otherwise, i.e., when the merging flag is '0' (false), a mergeable block does not exist and in a state in which block merging with any one block of temporary blocks is not performed, motion parameters are transmitted to the decoder.

If the merging flag is '1' (true), the following operation is performed. If a mergeable block set includes only one block, one block included in such a mergeable block set is used for block merging. If a mergeable block set includes two blocks and if motion parameters of such two blocks are the same, motion parameters of two blocks belonging to such a mergeable block are used for the present block. For example, if a merge_left_flag is '1' (true), in the mergeable block set, a left peripheral sample position of top-left sample positions of the present block X may be selected, and if a merge_left_flag is '0' (false), in the mergeable block set, the remaining top peripheral sample position of the top-left sample positions of the present block X may be selected. As described above, motion parameters of selected blocks are used for the present block.

Referring again to FIG. 8, blocks (blocks 'Ao' and 'B0') including direct (top or left) peripheral samples of the top-left sample position may be included within the mergeable block set. Therefore, the present block X is merged with the block Ao or the block Bo. If the merge_flag is 0 (false), the present block X is not merged with either one of the block Ao and the block Bo. If the block Ao and the block Bo have the same motion parameter and/or filter information, even if the present block X is merged with any one of two blocks of the block Ao and the block Bo, the same result is obtained and thus it is unnecessary to divide two of the block Ao and the block Bo. Therefore, in this case, it is unnecessary to transmit the merge_left_flag. Otherwise, i.e., if the block Ao and the block Bo have different motion parameters and/or filter information and if the merge_left_flag is 1, the present block X is merged with the block Bo, and if the merge_left_flag is 0, the present block X is merged with the block Ao.

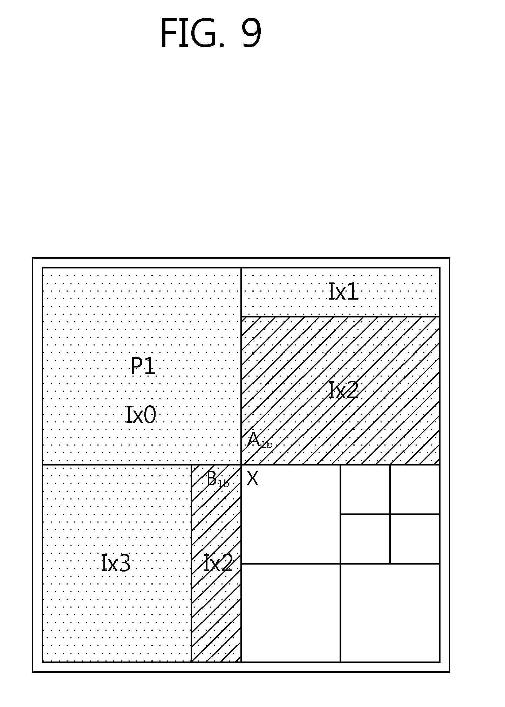

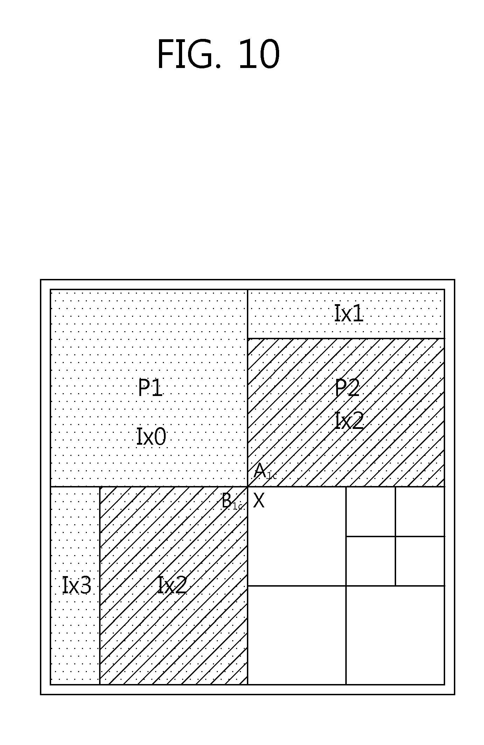

FIGS. 9 and 10 are conceptual diagrams illustrating a process of selecting and using a filter in a partition unit using block merging in asymmetric partitioning according to another exemplary embodiment of the present invention.

FIGS. 9 and 10 illustrate two examples of block merging when using asymmetrical partitioning of FIG. 4 in inter prediction and block merging is not limited to a case shown in FIGS. 9 and 10, and block merging according to another exemplary embodiment of the present invention may be applied to a combination of various partitioning cases shown in FIG. 4.

Referring to FIG. 9, the present block X is merged with a block A1 b or a block B1 b belonging to the mergeable block set. If the merge_flag is 0 (false), the present block X is not merged with either one of the block A1 b and the block B1 b. If the merge_left_flag is '1' (true), and in the mergeable block set, the block B1b may be selected to merge with the present block X, and if the merge_left_flag is '0' (false), the block A1 b may be selected to merge with the present block X.

Referring to FIG. 10, the present block X is merged with a block A1c or a block B1c belonging to the mergeable block set. If the merge_flag is 0 (false), the present block X is not merged with either one of the block A1c and the block B1c. If the merge_left_flag is '1' (true), and in the mergeable block set, the block B1 c may be selected to merge with the present block X, and if the merge_left_flag is '0' (false), the block A1c may be selected to merge with the present block X.

Referring to FIGS. 9 and 10, the same filter is selected for block merged asymmetrical partitions and the same filter information may be transmitted to the decoder. For example, in FIG. 9, for merged asymmetrical partitions A1b and B1b, the same filter index Ix2 may be transmitted to the decoder. In FIG. 10, for the merged asymmetrical partition A1c and B1c, the same filter index Ix2 may be transmitted to the decoder.

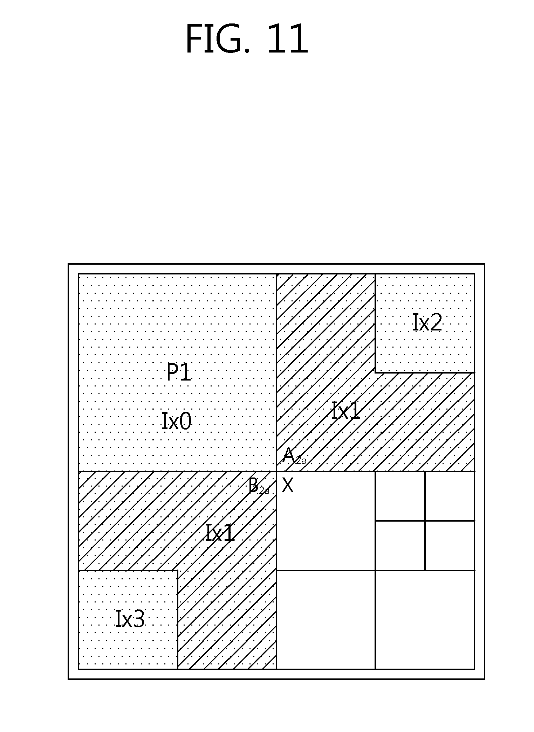

FIG. 11 is a conceptual diagram illustrating a process of selecting and using a filter in a partition unit using block merging in geometric partitioning according to another exemplary embodiment of the present invention.

FIG. 11 exemplifies block merging when using geometric partitioning of FIG. 6 in inter prediction, and block merging is not limited to a case shown in FIG. 11, and block merging according to another exemplary embodiment of the present invention may be applied to a combination of various partitioning shown in FIG. 6.

Referring to FIG. 11, the blocks (blocks 'A2', 'B2') including top or left peripheral samples of top-left sample positions of the present block X may be included within the mergeable block set. Therefore, the present block X is merged with a block A2a or a block B2a. If a merge_flag is 0 (false), the present block X is not merged with either one of the block A2a and the block B2a. For example, if the merge_left_flag is '1' (true), in the mergeable block set, the block B2a including left peripheral samples of top-left sample positions of the present block X may be selected to merge with the present block X, and if the merge_left_flag is 0 (false), in the mergeable block set, the block A2a including the remaining top peripheral samples of top-left sample positions of the present block X may be selected to merge with the present block X.

Referring to FIG. 11, for block merged geometric partitions, the same filter is selected and the same filter information may be transmitted to the decoder. For example, in FIG. 11, for the merged geometric partition A2a and B2a, the same filter index Ix1 may be transmitted to the decoder.

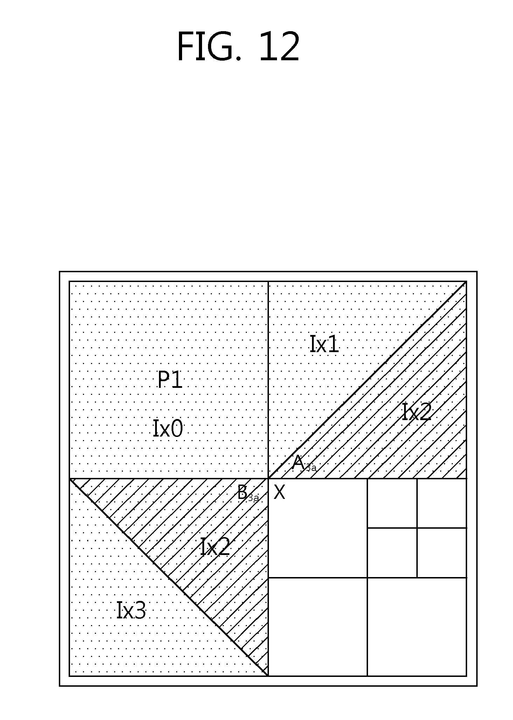

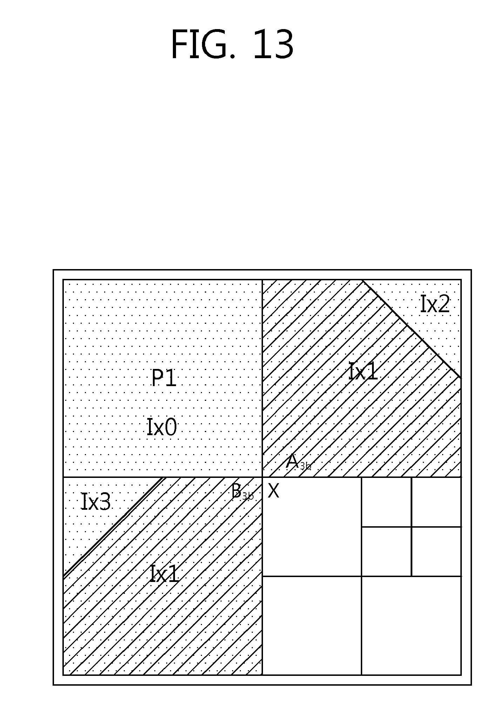

FIGS. 12 and 13 are conceptual diagrams illustrating a process of selecting and using a filter in a partition unit using block merging in geometric partitioning according to another exemplary embodiment of the present invention.

FIGS. 12 and 13 illustrate two examples of block merging when using geometric partitioning of FIGS. 5 and 7 in inter prediction, and block merging is not limited to only a case shown in FIGS. 12 and 13, and block merging according to another exemplary embodiment of the present invention may be applied to a combination of various geometric partitioning shown in FIGS. 5 and 7.

Referring to FIG. 12, blocks (blocks 'A3a' and 'B3a') including top or left peripheral samples of top-left sample positions of the present block X may be included within the mergeable block set. Therefore, the present block X is merged with the block A3a or the block B3a. If the merge_flag is 0 (false), the present block X is not merged with either one of the block A3a and the block B3a. For example, if the merge_left_flag is '1' (true), and in the mergeable block set, the block B3a including left peripheral samples of top-left sample positions of the present block X may be selected to merge with the present block X, and if the merge_left_flag is '0' (false), in the mergeable block set, the block A3a including the remaining top peripheral samples of top-left sample positions of the present block X may be selected to merge with the present block X.

Referring to FIG. 13, the present block X is merged with the block A3b or the block B3b belonging to the mergeable block set. If the merge_flag is 0 (false), the present block X is not merged with either one of the block A3b and the block B3b. If the merge_left_flag is '1' (true), and in the mergeable block set, the block B3b may be selected to merge with the present block X, and if the merge_left_flag is '0' (false), the block A3b may be selected to merge with the present block X.

Referring to FIGS. 12 and 13, the same filter is selected to block merged geometric partitions and the same filter information may be transmitted to the decoder. For example, in FIG. 12, for merged geometric partitions A3a and B3a, the same filter index Ix2 may be transmitted to the decoder. For example, in FIG. 13, for the merged geometric partitions A3b and B3b, the same filter index Ix1 may be transmitted to the decoder.

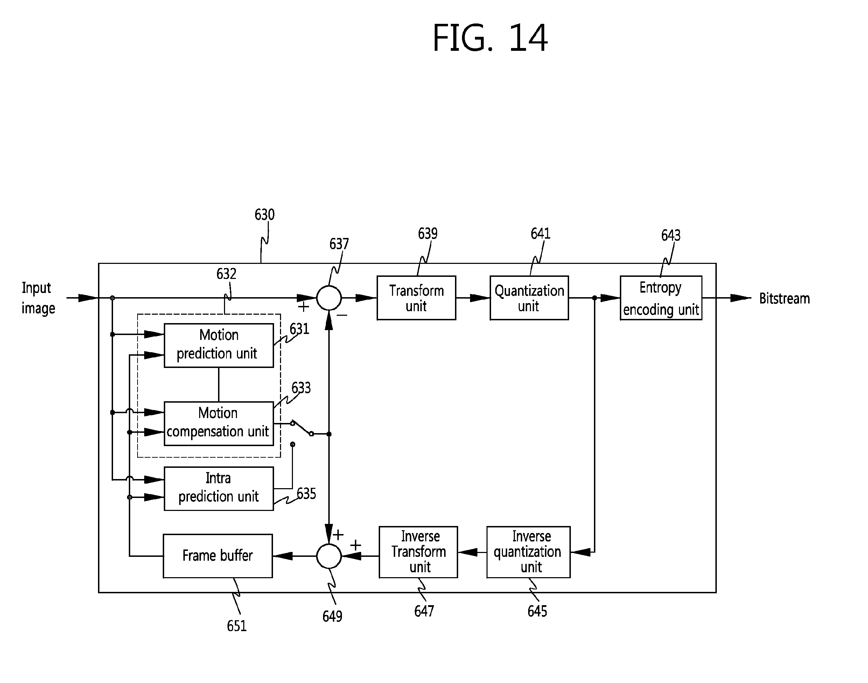

FIG. 14 is a block diagram illustrating a configuration of an image encoding apparatus for selecting and encoding a filter in a slice or partition unit according to an exemplary embodiment of the present invention.

Referring to FIG. 14, an image encoding apparatus may include an encoder 630, and the encoder 630 may include an inter prediction unit 632, an intra prediction unit 635, a subtractor 637, a transform unit 639, a quantization unit 641, an entropy encoding unit 643, an inverse quantization unit 645, an inverse transform unit 647, an adder 649, and a frame buffer 651. The inter prediction unit 632 includes a motion prediction unit 631 and a motion compensation unit 633.

The encoder 630 performs encoding of an input image. The input image may be used for inter prediction in the inter prediction unit 632 or intra prediction in the intra prediction unit 635 in a PU unit.

A size of a prediction unit applied to the inter prediction or intra prediction may be determined according to a temporal frequency characteristic of a stored frame (or a picture) after storing an input image at a buffer (not shown) provided within the encoder. For example, a prediction unit determining unit 610 may analyze temporal frequency characteristics of an (n-1)st frame (or picture) and an n-th frame (or picture), and if an analyzed temporal frequency characteristic value is less than a preset first threshold value, a size of the prediction unit may be determined to 64x64 pixels, if the analyzed temporal frequency characteristic value is larger than a preset first threshold value and less than a preset second threshold value, a size of the prediction unit is determined to 32x32 pixels, and if the analyzed temporal frequency characteristic value is equal to or larger than a preset second threshold value, a size of the prediction unit may be determined to a size of 16x16 pixels or less. Here, when a change amount between frames (or pictures) is smaller than that of the second threshold value, the first threshold value may represent a temporal frequency characteristic value.

A size of a prediction unit applied to inter prediction or intra prediction may be determined according to spatial frequency characteristics of a stored frame (or picture) after an input image stores at a buffer (not shown) provided within the encoder. For example, when image flatness or uniformity of an input frame (or picture) is high, a size of the prediction unit is greatly set to 32x32 pixels or more, and when image flatness or uniformity of a frame (or picture) is low (i.e., when a spatial frequency is high), a size of the prediction unit may be set in a small value to 16x16 pixels or less.

Although not shown in FIG. 8, operation of determining a size of a prediction unit may be performed by receiving an input of the input image and performing the input image in an encoding controller (not shown) or by receiving an input of the input image and performing the input image in a separate prediction unit determining unit (not shown). For example, a size of the prediction unit may have a size of 16x16 pixels or less, a 32x32 pixel size, and a 64x64 pixel size.

As described above, prediction unit information including a size of a prediction unit determined for inter prediction or intra prediction is provided to the entropy encoding unit 643 and is provided to the encoder 630 in a PU unit having a determined size. Specifically, when encoding and decoding using an EMB and an EMB size, prediction block information may include MB size information or EMB size information. Here, the EMB size is 32x32 pixel size or more and may include, for example, a 32x32 pixel size, a 64x64 pixel size, or a 128x128 pixel size. When performing encoding and decoding using the foregoing recursive CU, prediction unit information may include size information of a leaf coding unit (LCU) to be used for inter prediction or intra prediction, i.e., size information of a prediction unit instead of size information of the macroblock, and furthermore, prediction unit information may further include a size of the LCU, a size of the SCU, a maximum allowable level or depth, and flag information.

The encoder 630 performs encoding of a prediction unit having the determined size.

The inter prediction unit 632 divides a provided prediction unit to be encoded at present using a partitioning method such as the foregoing asymmetrical partitioning and geometric partitioning, estimates a motion in the partition divided block unit, and generates an MV.

The motion prediction unit 631 divides a provided present prediction unit using the foregoing various partitioning methods and searches for a region similar to a presently encoded partition divided block and generates an MV in a block unit in at least one reference picture (encoding of the picture is complete and the picture is stored in the frame buffer 651) positioned at the front and/or the rear of a presently encoded picture on the partition divided block basis. Here, a size of a block used for the motion estimation may be varied, and when applying asymmetrical partitioning and geometric partitioning according to an exemplary embodiment of the present invention, a shape of the block may have an asymmetrical shape such as a rectangle and a geometrical shape such as a 'reversed L' shape and a triangular shape, as shown in FIGS. 2 and 3 as well as an existing square shape.

The motion compensation unit 633 generates a prediction block (or a predicted prediction unit) obtained by performing motion compensation using an MV generated in the motion prediction unit 631 and a reference picture.

As described above, the inter prediction unit 632 selects an interpolation filter used for motion compensation based inter prediction on a more precise unit basis, the more precise unit being more precise than a picture unit (e.g., a slice unit or a partition unit (the partition unit may include an EMB, an MB, or a block)), and calculates a sub-pixel value.

When using a partition unit as a transmitting unit of filter information (a filter index or a filter coefficient) of the interpolation filter, the inter prediction unit 632 uses an entire merged block in a transmitting unit of a motion parameter and/or filter information using the foregoing block merging.

Further, when the inter prediction unit 632 uses an EMB by adaptively selecting and using among 1/2 pel, 1/4 pel, and 1/8 pel as MV precision or pixel precision for the EMB, encoding efficiency can be enhanced. For example, when applying 1/2 pel MV precision or pixel precision, in a P picture, a 1/2 pel pixel precision signal may be generated using a 6-tab interpolation filter having filter coefficients (1, -5, 20, 20, -5, 1)/32). In the foregoing description, a case of 6 filter coefficients is exemplified, but a filter coefficient is not limited thereto and may be an even number of 4, 8, 10, and 12. When 1/4 pel MV precision or pixel precision is applied, after a value of a 1/2 pel pixel precision signal is generated, by applying a mean value filter, a 1/4 pel pixel precision signal may be generated. When 1/8 pel MV precision or pixel precision is applied, after a value of a 1/4 pel pixel precision signal is generated, by applying a mean value filter, a 1/8 pel pixel precision signal may be generated.

A filter coefficient may be changed according to a bi-directional prediction mode, a single directional prediction mode, and pixel precision (e.g., 1/2 pel pixel precision, 1/4 pel pixel precision, or 1/8 pel pixel precision). The decoder may select an appropriate filter coefficient according to a bi-directional prediction mode, a single directional prediction mode, or pixel precision (e.g., 1/2 pel pixel precision, 1/4 pel pixel precision, or 1/8 pel pixel precision). The filter coefficient may be a filter coefficient of an interpolation filter, a filter coefficient of a deblocking filter, or an ALF filter coefficient used for motion compensation based inter prediction.

The intra prediction unit 635 performs intra prediction encoding using pixel correlation between blocks. The intra prediction unit 635 performs intra prediction that predicts and obtains a pixel value of a prediction block of a present prediction unit from an already encoded pixel value of a block within a present frame (or picture).

The subtractor 637 generates a residual by subtracting a present block (or a present prediction unit) and a prediction block (or a predicted prediction unit) provided from the motion compensation unit 633, and the transform unit 639 and the quantization unit 641 perform Discrete Cosine Transform (DCT) of the residual and quantize. Here, the transform unit 639 may perform transform based on prediction unit size information, for example, may perform transform in a 32x32 or 64x64 pixel size. Alternatively, the transform unit 639 may perform transform in a separate Transform Unit (TU) unit independently of prediction unit size information provided from the prediction unit determining unit 610. For example, a TU size may be from a minimum 4 X 4 pixel size to a maximum 64x64 pixel size. Alternatively, a maximum size of the TU may be a 64x64 pixel size or more, for example, a 128 X 128 pixel size. TU size information may be included in TU information to be transmitted to the decoder.

The entropy encoding unit 643 entropy encodes header information such as quantized DCT coefficients, an MV, determined prediction unit information, partition information, filter information, and TU information and generates bitstream.

The inverse quantization unit 645 and the inverse transform unit 647 inversely quantize and inversely transform quantized data through the quantization unit 641. The adder 649 restores an image by adding inversely transformed data and a predicted prediction unit provided from the motion compensation unit 633 and provides the restored image to the frame buffer 651, and the frame buffer 651 stores the restored image.

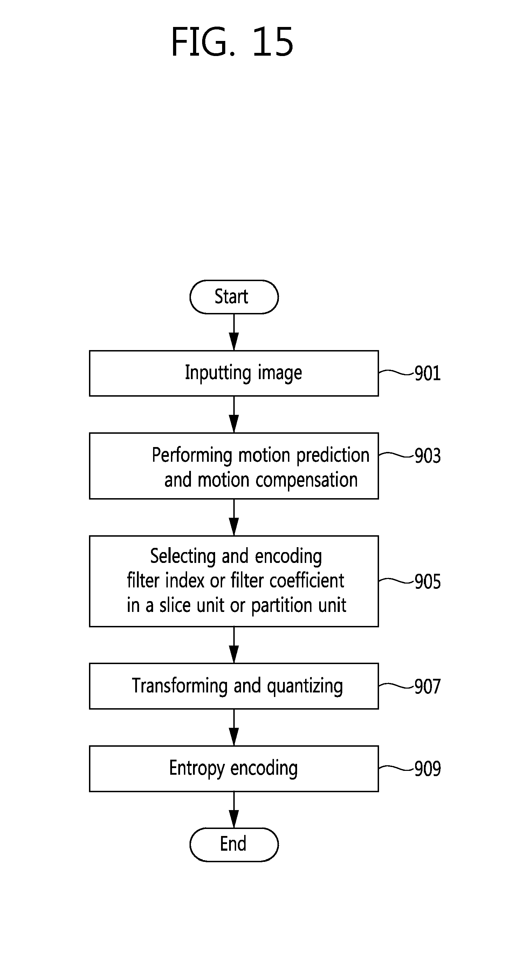

FIG. 15 is a flowchart illustrating an image decoding method of selecting and encoding a filter in a slice or partition unit according to an exemplary embodiment of the present invention.

Referring to FIG. 15, when an input image is input to the encoding apparatus (step 901), for the input image, the encoding apparatus divides a prediction unit for inter prediction or intra prediction using the foregoing various partitioning methods and generates an MV in a block unit by searching for a region similar to a presently encoded partition divided block in at least one reference picture (encoding of the picture is complete and the picture is stored in the frame buffer 651) positioned at the front and/or the rear of a presently encoded picture on the partition divided block basis, and by performing motion compensation using the generated MV and picture, the encoding apparatus generates a prediction block (or a predicted prediction unit) (step 903).

Thereafter, the encoding apparatus calculates a sub-pixel value by selecting an interpolation filter used for motion compensation based inter prediction on a more precise unit basis than a picture unit, for example, a slice unit or a partition unit (the partition unit may include an EMB, an MB, or a block) (step 905). Specifically, as described above, the encoding apparatus calculates and encodes a sub-pixel value by selecting filter information (a filter index or a filter coefficient) of an interpolation filter used for motion compensation based inter prediction on a more precise unit basis, the more precise unit being more precise than a picture unit, for example, a slice unit or a partition unit.

When using a partition unit as a transmitting unit of filter information (a filter index or a filter coefficient) of the interpolation filter, the encoding apparatus uses an entire merged block in a transmitting unit of a motion parameter and/or filter information using the foregoing block merging.

Further, for the EMB, when the encoding apparatus uses the EMB by adaptively selecting and using 1/2 pel, 1/4 pel, and 1/8 pel as MV precision or pixel precision, encoding efficiency can be enhanced. For example, when applying 1/2 pel MV precision or pixel precision, in a P picture, a 1/2 pel pixel precision signal may be generated using a 6-tab interpolation filter having filter coefficients (1, -5, 20, 20, -5, 1)/32). When 1/4 pel MV precision or pixel precision is applied, after a value of a 1/2 pel pixel precision signal is generated, by applying a mean value filter, a 1/4 pel pixel precision signal may be generated. When 1/8 pel MV precision or pixel precision is applied, after a value of a 1/4 pel pixel precision signal is generated, by applying a mean value filter, a 1/8 pel pixel precision signal may be generated.

A filter coefficient may be changed according to a bi-directional prediction mode, a single directional prediction mode, and pixel precision (e.g., 1/2 pel pixel precision, 1/4 pel pixel precision, or 1/8 pel pixel precision). The decoder may select an appropriate filter coefficient according to a bi-directional prediction mode, a single directional prediction mode, and pixel precision (e.g., 1/2 pel pixel precision, 1/4 pel pixel precision, or 1/8 pel pixel precision). The filter coefficient may be a filter coefficient of an interpolation filter, a filter coefficient of a deblocking filter, or an ALF filter coefficient used for motion compensation based inter prediction.

By generating a residual by obtaining a difference between a present prediction unit and the predicted prediction unit, the encoding apparatus transforms and quantizes (step 907) and generates bitstream by entropy encoding header information (or a syntax element) such as quantized DCT coefficients and a motion parameter, and filter information (step 909).

Entropy encoding reduces the number of bits necessary for an expression of syntax elements. That is, entropy encoding is lossless operation of an object to minimize the number of bits necessary for representing transmitted or stored symbols using a distribution characteristic of syntax elements in which some symbols occur more frequently than other symbols.

In an apparatus and method for encoding an image according to exemplary embodiments of the present invention, for each prediction block, filter information is not transmitted and by transmitting filter information one time to an entire merged block using block merging and by reducing a transmitting amount of filter information, encoding efficiency of an image having a high resolution of an HD level or an ultra HD level or more can be enhanced.

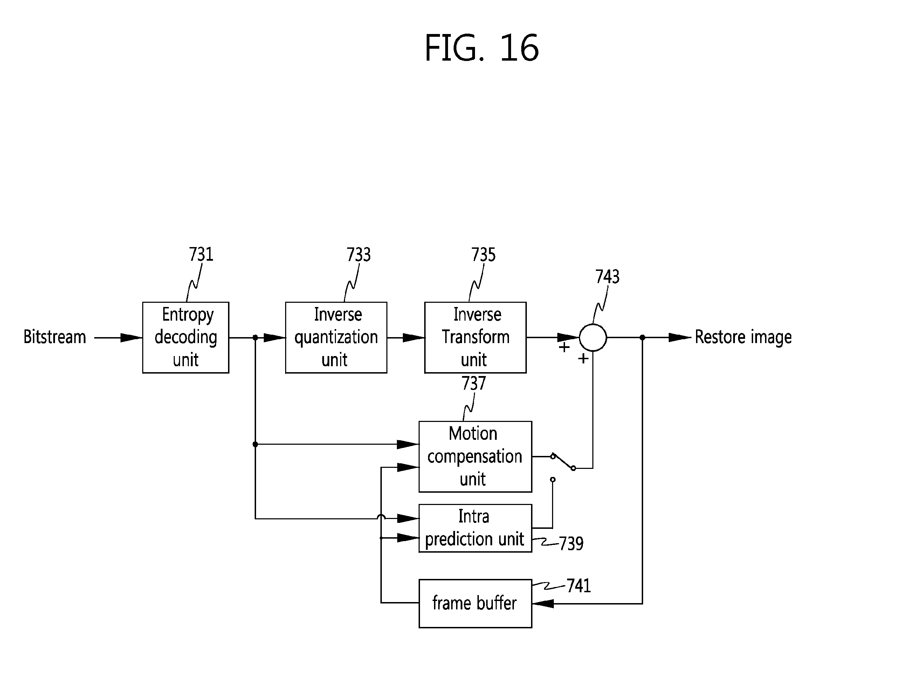

FIG. 16 is a block diagram illustrating a configuration of an image decoding apparatus according to an exemplary embodiment of the present invention.

Referring to FIG. 16, a decoding apparatus according to an exemplary embodiment of the present invention includes an entropy decoding unit 731, an inverse quantization unit 733, an inverse transform unit 735, a motion compensation unit 737, an intra prediction unit 739, a frame buffer 741, and an adder 743.

The entropy decoding unit 731 receives compressed bitstream and generates a quantized coefficient by performing entropy decoding. The inverse quantization unit 733 and the inverse transform unit 735 perform inverse quantization and inverse transform of a quantized coefficient and restore a residual.

Header information decoded by the entropy decoding unit 731 may include prediction unit size information, and the prediction unit size may be, for example, an EMB size of a 16x16 pixel size, a 32x32 pixel size, a 64x64 pixel size, or a 128x128 pixel size. Further, the decoded header information may include a motion parameter and filter information (a filter index or a filter coefficient) for motion compensation and prediction. The filter information may include filter information transmitted on a block basis merged by block merging methods according to exemplary embodiments of the present invention.

The motion compensation unit 737 generates a predicted prediction unit by performing motion compensation of a prediction unit of the same size as that of an encoded prediction unit using the motion parameter and/or filter information and using decoded header information from bitstream by the entropy decoding unit 731. The motion compensation unit 737 generates a predicted prediction unit by performing motion compensation using a motion parameter and/or filter information transmitted on a block basis merged by block merging methods according to exemplary embodiments of the present invention.

Further, for an encoded EMB by adaptively selecting among 1/2 pel, 1/4-pel, and 1/8 pel as MV precision or pixel precision, the motion compensation unit 737 performs motion compensation of the EMB by adaptively selecting among 1/2 pel, 1/4-pel, and 1/8 pel based on selected pixel precision information.

A filter coefficient may be changed according to a bi-directional prediction mode, a single directional prediction mode, and pixel precision (e.g., 1/2 pel pixel precision, 1/4 pel pixel precision, or 1/8 pel pixel precision). The decoder may select an appropriate filter coefficient according to a bi-directional prediction mode, a single directional prediction mode, or pixel precision (e.g., 1/2 pel pixel precision, 1/4 pel pixel precision, or 1/8 pel pixel precision). The filter coefficient may be a filter coefficient of an interpolation filter, a filter coefficient of a deblocking filter, or an ALF filter coefficient used for motion compensation based inter prediction.

The intra prediction unit 739 performs inter prediction encoding using pixel correlation between blocks. The intra prediction unit 739 performs intra prediction that predicts and obtains a pixel value of a prediction block of a present prediction unit from an already encoded pixel value of a block within a present frame (or a picture).

The adder 743 restores an image by adding a residual provided from the inverse transform unit 735 and a predicted prediction unit provided from the motion compensation unit 737 and provides the restored image to the frame buffer 741, and the frame buffer 741 stores the restored image. That is, the decoder adds a compressed prediction error (residual provided from the inverse transform unit) to the prediction unit and performs a decoding operation.

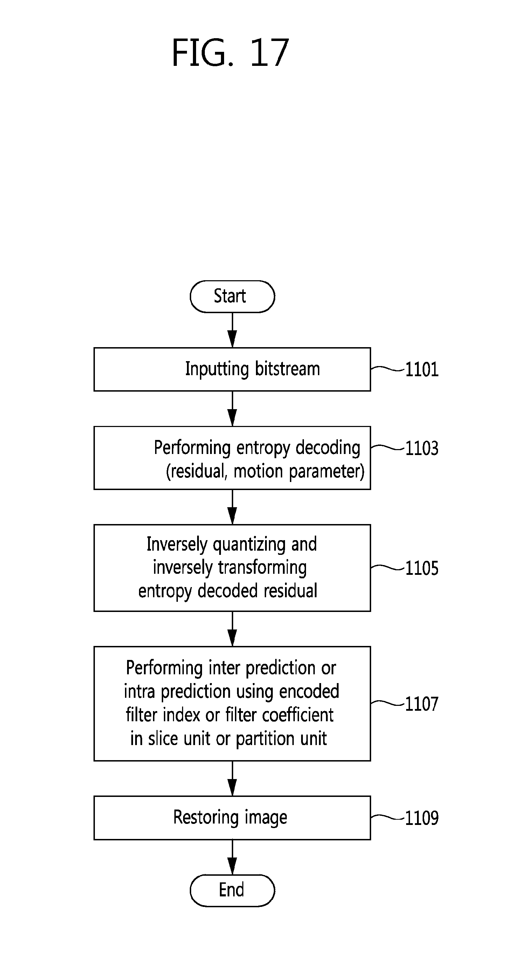

FIG. 17 is a flowchart illustrating a method of decoding an image according to an exemplary embodiment of the present invention.

Referring to FIG. 17, the decoding apparatus receives bitstream from the encoding apparatus (step 1101).

Thereafter, the decoding apparatus performs entropy decoding of the received bitstream (step 1103). Data decoded through entropy decoding includes a residual representing a difference between a present prediction unit and a predicted prediction unit. Header information decoded through entropy decoding may include additional information such as prediction unit information, a motion parameter and/or filter information (a filter index or a filter coefficient) for motion compensation and prediction. The prediction unit information may include prediction unit size information. The motion parameter and/or filter information may include a motion parameter and/or filter information transmitted on a block basis merged by block merging methods according to an exemplary embodiment of the present invention.

Here, when performing encoding and decoding using the foregoing recursive CU instead of encoding and decoding using an EMB and an EMB size, PU information may include a size of a largest coding unit (LCU), a size of a smallest coding unit (SCU), a maximum allowable level or depth, or flag information.

A decoding controller (not shown) may receive information about a size of the PU applied in the encoding apparatus from the encoding apparatus and perform motion compensation decoding, inverse transform, or inverse quantization to be described later according to a size of the PU applied in the encoding apparatus.

The decoding apparatus inversely quantizes and inversely transforms the entropy decoded residual (step 1105). The inverse transform process may be performed in a prediction unit size (e.g., 32x32 or 64x64 pixel) unit.

The decoding apparatus generates a predicted prediction unit by performing inter prediction or intra prediction using prediction unit size information, a motion parameter for motion compensation and prediction, filter information, and a previously restored picture (step 1107). The decoding apparatus performs inter prediction or intra prediction using prediction unit size information and a motion parameter and/or filter information transmitted on a block basis merged by block merging methods according to exemplary embodiments of the present invention.

Further, for an encoded EMB by adaptively selecting among 1/2 pel, 1/4-pel, and 1/8 pel as MV precision or pixel precision, the decoder performs motion compensation of the EMB by adaptively selecting among 1/2 pel, 1/4-pel, and 1/8 pel based on selected pixel precision information.

A filter coefficient may be changed according to a bi-directional prediction mode, a single directional prediction mode, and pixel precision (e.g., 1/2 pel pixel precision, 1/4 pel pixel precision, or 1/8 pel pixel precision). The decoder may select an appropriate filter coefficient according to a bi-directional prediction mode, a single directional prediction mode, or pixel precision (e.g., 1/2 pel pixel precision, 1/4 pel pixel precision, or 1/8 pel pixel precision). The filter coefficient may be a filter coefficient of an interpolation filter, a filter coefficient of a deblocking filter, or an ALF filter coefficient used for motion compensation based inter prediction.

The decoder adds an inversely quantized and inversely transformed residual and a prediction unit predicted through the inter prediction or intra prediction and restores an image (step 1109).

Exemplary embodiments of methods of encoding/decoding by selecting an interpolation filter used for the foregoing motion compensation based inter prediction in a more precise unit more precise than a picture unit and a method of transmitting additional information by block merging or region merging may be applied to encoding/decoding of a luma component, and for a chroma component, an interpolation filter used for the foregoing motion compensation based inter prediction may be applied to encoding/decoding by selecting the same unit (i.e., a more precise unit more precise than a picture unit) as that applied to the luma component.

A method of encoding/decoding the interpolation filter used for the foregoing motion compensation based inter prediction in a more precise unit more precise than a picture unit (e.g., a region) may be applied even to an Adaptive Loop Filter (hereinafter, ALF) after a deblocking filter. That is, ALF filter information may be encoded/decoded in a more precise unit more precise than a picture unit (e.g., a region). Here, the region may become a unit smaller than a picture unit and larger than a pixel. A region unit smaller than a picture unit and larger than a pixel may become, for example, a basic unit formed with at least one block, sub block, MB, EMB, slice, Coding Unit, Largest Coding Unit (LCU), Smallest Coding Unit (SCU), Prediction Unit, partition, or group or a basic unit set formed with a set of basic units formed with a plurality of basic units. A picture may be divided, for example, in a region unit having a uniform size formed with 16 x 16 pixels.

As described above, the ALF filter coefficient may be selected and used in a more precise region unit more precise than a picture unit to be transmitted to the decoder, and the region unit may have an uniform size within an entire picture or one picture, but may have different sizes on an each picture basis, and may be adaptively adjusted to have different sizes even within the same picture.

Size information of the region may be included in a slice header or a Picture Parameter Set (PPS) to be transmitted to the decoder. Filter information of the ALF filter may be included in a slice header or a PPS to be transmitted to the decoder. On-off information of the ALF filter may be included in the slice header or the PPS to be transmitted to the decoder. For example, filter information of the ALF filter may be included in the PPS to be transmitted to the decoder, and on-off information of the ALF filter may be included in each slice header to be transmitted to the decoder.

A form of the region may be a symmetrical shape of a square form and may be an asymmetric shape such as a rectangular shape and various geometrical shapes such as a 'reversed L' shape and a triangular shape.

In a plurality of regions divided in one picture, at least two regions are merged to reduce a quantity of additional information to transmit to the decoder, for example, filter information of the ALF filter and on-off information of the ALF filter, by using the entire merged regions in a transmitting unit of the additional information and by reducing a quantity of additional information to transmit to the decoder, encoding efficiency of an image having a high resolution of an HD level or an ultra HD level can be enhanced. The merged at least two regions may become a top peripheral region and/or a left peripheral region of a specific region, become at least two peripheral regions that enclose the specific region, become regions belonging to at least two columns arranged in a vertical direction within one picture, and become regions belonging to at least two rows arranged in a horizontal direction within one picture.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of encoding an image, the method comprising:
generating a prediction unit for inter prediction of an input image;
performing a motion compensation based inter prediction on the prediction unit; and
selecting at least one of a filter used for the motion compensation based inter prediction and an Adaptive Loop Filter (ALF) after a deblocking filter on a more precise unit basis, the more precise unit being more precise than a picture unit.

2. The method of claim 1, wherein the more precise unit is a region unit smaller than the picture unit.

3. The method of claim 1, wherein the performing of motion compensation based inter prediction comprises:
dividing a partition of the prediction unit and performing block merging that merges samples belonging to a mergeable block set including peripheral samples of a present block with the present block; and
selecting filter information of the filter used for the motion compensation based inter prediction on the precise unit basis and calculating a subfixel value, wherein the filter information includes at least one of a filter index and a filter coefficient.

4. The method of claim 3, wherein the same filter information is allocated to the merged block and is transmitted to a decoder, and the mergeable block set includes at least one of a block generated by geometrical partitioning and a block generated by asymmetric partitioning.

5. The method of claim 1, wherein filter information of the ALF is included in a Picture Parameter Set, and on-off information of the ALF is included in each slice header.

6. A method of decoding an image, the method comprising:
entropy decoding received bitstream, performing inverse quantization and inverse transform of a residual, and restoring the residual;
generating a prediction unit using prediction unit information and a motion parameter;
extracting encoded filter information by selecting on a more precise unit basis, the more precise unit being more precise than a picture unit, wherein the filter information includes at least one of a filter index and a filter coefficient; and
restoring an image by adding a residual to the prediction unit in which inter prediction is performed by performing inter prediction on the prediction unit.

7. The method of claim 6, wherein the more precise unit is a region unit smaller than the picture unit.

8. The method of claim 6, wherein the extracted filter information is filter information of an Adaptive Loop Filter (ALF) after a deblocking filter, and the filter information is included in a picture parameter set, and on-off information of the ALF is included in each slice header.

9. The method of claim 6, wherein the filter coefficient is selected based on at least one of a bi-directional prediction mode, a single directional prediction mode, and pixel precision.

10. The method of claim 6, wherein after a partition of the prediction unit is divided, a present block and a merged block among blocks belonging to a mergeable block set have the same filter information.

11. The method of claim 6, wherein the filter information is filter information of a filter used for motion compensation based inter prediction.

12. The method of claim 6, wherein the mergeable block set includes at least one of a block generated by geometrical partitioning and a block generated by asymmetric partitioning.

13. The method of claim 6, wherein header information decoded through the entropy decoding includes prediction unit information and a motion parameter and filter information for motion compensation and prediction.

14. An image decoding apparatus, comprising:
an inverse quantization unit and inverse transform unit that perform inverse quantization and inverse transform of a residual by entropy decoding of received bitstream and restore the residual;
a motion compensation unit that generates a prediction unit using prediction unit information and a motion parameter; and
an adder that restores an image by adding the residual to the prediction unit,
wherein the image decoding apparatus extracts filter information encoded by selecting on a more precise unit basis, the more precise unit being more precise than a picture unit, wherein the filter information includes at least one of a filter index and a filter coefficient.

15. The image decoding apparatus of claim 14, wherein the more precise unit is a region unit smaller than the picture unit.

16. The image decoding apparatus of claim 14, wherein the extracted filter information is filter information of an Adaptive Loop Filter (ALF) after a deblocking filter, and the filter information is included in a picture parameter set, and on-off information of the ALF is included in each slice header.

17. The image decoding apparatus of claim 14, wherein the filter coefficient is selected based on at least one of a bi-directional prediction mode, a single directional prediction mode, and pixel precision.

18. The image decoding apparatus of claim 14, wherein after a partition of the prediction unit is divided, a present block and a merged block among blocks belonging to a mergeable block set have the same filter information.

19. The image decoding apparatus of claim 14, wherein the mergeable block set includes at least one of a block generated by geometrical partitioning and a block generated by asymmetric partitioning.

20. The image decoding apparatus of claim 14, wherein header information decoded through the entropy decoding includes prediction unit information and a motion parameter and filter information for motion compensation and prediction.
